# EUROPEAN PATENT SPECIFICATION

(11) **EP 1 562 737 B1**
(45) Date of publication and mention of the grant of the patent: **12.04.2006**
(21) Application number: 03810542.5
(22) Date of filing: 01.08.2003
(51) Int. Cl.: B29D 30/20, B29D 30/00

(54) **PROCESS AND PLANT FOR MANUFACTURING TIRES FOR VEHICLE WHEELS**
VERFAHREN UND ANLAGE ZUR HERSTELLUNG VON REIFEN FÜR FAHRZEUGRÄDER
PROCEDE ET USINE DE FABRICATION DE PNEUMATIQUES DESTINES A DES ROUES DE VEHICULE

(30) Priority: 05.11.2002 WO PCT/IT02/00698
(43) Date of publication of application: 17.08.2005
(73) Proprietor: Pirelli Pneumatici S.p.A., 20126 Milano (IT)
(72) Inventor: Lacagnina, Claudio c/o Pirelli Pneumatici S.p.A., I-20126 Milano (IT)
(74) Representative: Giannesi, Pier Giovanni
(86) International application number: PCT/IB2003/003077
(87) International publication number: WO 2004/041520

(56) References cited:
- EP-A- 1 106 335
- EP-A- 1 211 057
- WO-A-01/32409
- WO-A-01/36185
- WO-A-02/094545
- WO-A-03/053662
- US-A- 3 775 220
- DATABASE WPI Week 7744 Derwent Publications Ltd., London, GB; AN 1977-78874Y XP002261484 -& SU 273 922 A (TYRE IND EQUIP RES DES), 22 February 1977 (1977-02-22)

## Description

The present invention relates to a process for the production of tires for vehicle wheels and to a plant which can be used to implement the abovementioned production process.

A tire for vehicle wheels generally comprises a carcass structure comprising at least one carcass ply having respectively opposite terminal edges folded around annular reinforcing structures normally each formed by a substantially circumferential annular insert on which at least one filling insert is applied in a radially external position.

The carcass structure generally has, associated with it, a belt structure comprising one or more belt layers situated radially superimposed with respect to each other and with respect to the carcass ply and having textile or metal reinforcing cords which have an intersecting orientation and/or are substantially parallel to the direction of circumferential extension of the tire. A tread band, also made of elastomer material like other semifinished constituent parts of the tire, is applied to the belt structure in a radially external position.

It must be pointed out here that, in the context of the present description and in the claims below, the term "crude elastomer material" is understood as meaning a composition comprising at least one elastomer polymer and at least one reinforcing filler. Preferably, this composition also comprises additives such as, for example, a crosslinking agent and/or a plasticizer. Owing to the presence of the crosslinking agent, this material may be crosslinked by means of heating so as to form the finished article.

Respective sidewalls made of elastomer material are also applied to the side surfaces of the carcass structure, each extending from one of the lateral edges of the tread band as far as the respective annular bead-reinforcing structure, whereby said sidewalls, depending on the designs, may have respective radially external terminal edges superimposed on the lateral edges of the tread band, so as to form a constructional arrangement of the type usually known as "overlying sidewalls", or situated between the carcass structure and the lateral edges of the tread band itself, in a constructional arrangement of the type known as "underlying sidewalls".

In most of the known tire manufacturing processes it is envisaged that the carcass structure and the belt structure, together with the respective tread band, are manufactured separately from each other in respective work stations and are assembled together subsequently.

More particularly, the manufacture of the carcass structure envisages firstly that the carcass ply or plies are deposited on a first drum, usually referred to as "building drum", so as to form a cylindrical sleeve. The annular bead-reinforcing structures are fitted or formed on the opposite terminal edges of the carcass ply or plies, which are in turn folded back around the said annular structures.

At the same time, an outer sleeve is manufactured on a second drum or auxiliary drum, said sleeve comprising the belt layers deposited in a mutually superimposed radial arrangement and the tread band applied onto the belt layers in a radially external position. The outer sleeve is then removed from the auxiliary drum and joined to the carcass sleeve. The outer sleeve is, for this purpose, arranged coaxially around the carcass sleeve, following which the carcass ply or plies are shaped in a toroidal configuration by moving the beads axially towards each other and at the same time introducing fluid under pressure inside the carcass sleeve so as to cause application of the belt ring and the tread band onto the carcass structure of the tire in a radially external position. Assembly of the carcass sleeve with the outer sleeve may be performed on the same drum used for manufacture of the carcass sleeve, in which case reference is made to a "unistage building process". A building process of this type is described, for example, in the patent US 3,990,931.

Alternatively, assembly may be performed on a so-called shaping drum onto which the carcass sleeve and the outer sleeve are transferred so that building of the tire can be carried out in a so-called "two-stage building process", as described for example in the patents US 4,207,133 and EP 0 081 858.

In the conventional building methods, the tread band is normally made from a continuously extruded profiled part which, after being cooled in order to stabilize its geometric shape, is stored on suitable platforms or reels. The semifinished product in the form of portions or a continuous strip is then conveyed to a feeding unit which removes the sections or cuts, from the continuous strip, sections of predetermined length, each forming the tread band to be applied circumferentially onto the belt structure of a tire being processed.

The document EP 1,211,057 A2 illustrates a method for manufacturing a tire in which, during formation of a green tire, at least one constituent element such as a sidewall is formed by radially shaping outwards a central portion of a substantially cylindrical carcass structure and then winding around it a non-vulcanized rubber strip, joining the latter onto an external peripheral surface of the shaped carcass structure.

The document EP 1,201,414 A2 describes a method for manufacturing a tire which comprises: assembling non-vulcanized rubber components so as to form a green tire, vulcanizing the green tire, and winding a non-vulcanized rubber strip around it so that the wound elements have overall a predetermined cross-sectional shape for at least one of the non-vulcanized rubber components so as to form therefore at least one of said non-vulcanized rubber components.

The Applicants have investigated the possibility of achieving significant improvements in terms of production flexibility and product quality by introducing, in conjunction with a process for the production of tires by means of assembly of semifinished components, at least one step involving manufacture of a constituent tire element made of elastomer material, in particular a constituent element of the tread band and/or sidewalls, by winding a continuous long element along a predetermined path.

It must be pointed out that, in the context of the present description and in the claims below, the term "incomplete green tire structure" or more briefly "incomplete structure" is understood as meaning a green tire being processed, comprising a carcass structure having a substantially toroidal shape associated with annular reinforcing structures axially spaced from each other and optionally a belt structure associated with this carcass structure in a crown zone and without at least one constituent tire element made of elastomer material. Preferably, said at least one constituent tire element is chosen from among: tread band, tread band underlayer, sidewalls and anti-abrasive strip.

In the context of the present description and the claims below, the term "semifinished components assembly line" or also, more briefly, "assembly line" is understood as meaning a set of apparatus for building and subsequently shaping incomplete green tire structures from semifinished components produced separately, stored and subsequently supplied to the building machines; examples of these apparatus are the following: building drums (usually called "first-stage drums"), shaping drums (usually called "second-stage drums"), building and shaping drums (usually called "unistage drums"), drums for the production of belt structures (usually called "auxiliary drums"), devices for transferring the incomplete green tire structures, devices for transferring the belt structures, machines for manufacturing the semifinished products (comprising for example carcass plies, filling elements, belt strips, circumferential annular reinforcing inserts or "bead cores"), devices for storing the abovementioned semifinished products, and machines for supplying the semifinished products to the abovementioned drums.

In the context of the present description and the claims below, the term "station (or also line) for completion laying down a continuous long element" or also, more briefly, "completion station" or "completion line" is understood as meaning a set of apparatus for completing the abovementioned incomplete green tire structures, which comprise automated devices for handling the said incomplete green tire structures and devices for supplying and depositing a continuous long element of crude elastomer material. Completion is achieved by forming at least one constituent element of said tire, made of elastomer material, using the abovementioned continuous long element, below also called "elongated element", produced in situ, i.e. shortly before formation of said constituent element of the tire, without stages involving storage of the said elongated element.

In order to achieve the abovementioned production flexibility, the Applicants have set themselves the goal of combining assembly lines, by means of which incomplete green tire structures are produced, with completion lines, by means of which at least one constituent tire element made of elastomer material is formed so as to complete said incomplete structures. Document EP1106335-A discloses a method of tyre manufacturing of this kind and a related manufacturing plant.

The combination of these different production lines has resulted in the need to reconcile the varying productivity performance and the different levels of efficiency which are typical of these production lines, so as to combine a high productivity with a high level of efficiency of production. In particular, the Applicants have ascertained that the assembly lines have a high productivity, i.e. a short cycle time (in the region of 1 minute or even less), where "cycle time" is understood as meaning the time required for manufacture of a part (in the specific case, an incomplete green tire structure). The high productivity of the assembly lines is further increased owing to the fact that combination with the completion stations allows elimination, from the assembly process, of the stages involving application of at least one of the constituent tire elements made of elastomer material, in particular the tread band and/or sidewalls. On the other hand the assembly lines have a level of efficiency (i.e. a ratio between actual production time and programmed production time) which is fairly low, generally not greater than 60-70%, owing to recurrent machine stoppages resulting, for example, from the need to change the reels supplying the semifinished products and also malfunctions due to the high complexity of the machinery used. On the contrary, the lines for completion laying down a continuous long element have a lower productivity, with cycle times ranging generally between 1.6 and 2.3 minutes, but at the same time a high efficiency (80-90%), with limited machine stoppages owing to the relative constructional simplicity of the machinery used and the continuous production of the elongated element, which therefore does not require storage reels.

The Applicants have found that it is possible to combine, in a single plant, lines for assembly of semifinished components and lines for completion laying down a continuous long element, reconciling the varying productivity performance and the different levels of efficiency of the various lines, by means of a step involving temporary storage of the incomplete green tire structures between the assembly line and the completion station. This step involving temporary storage of the incomplete structures produced by the assembly line performs mainly a "regulating" function so as to be able to absorb the production of the assembly line when the latter is operative and constantly supply the completion station even when the assembly line is at a standstill.

The Applicants have also found that the abovementioned combination of the assembly line and completion line may be further improved by providing a completion station which is able to process at least two incomplete structures simultaneously. In this way it is possible to reduce the time spent by the incomplete green tire structures in the temporary storage stage, owing also to the fact that the completion station continues to be operative also during the stoppage times of the assembly line.

According to a first aspect, the invention relates to a process for producing tires, comprising the following steps:
(i) in at least one assembly line, producing in sequence, incomplete green tire structures having a substantially toroidal shape, the production of each incomplete structure comprising:
   (i-a) building a carcass structure in the form of a substantially cylindrical sleeve comprising at least one carcass ply operationally associated with annular reinforcing structures which are axially spaced from each other;
   (i-b) shaping the carcass structure so as to have a substantially toroidal shape;
(ii) temporarily storing the incomplete structures produced by said at least one assembly line;
(iii) transferring the incomplete structures to at least one completion station;
(iv) in said at least one completion station, forming on each incomplete structure at least one constituent element of the tire laying down at least one continuous long element of crude elastomer material along a predetermined path;
(v) subjecting the green tires thus produced to a vulcanization step.

According to a preferred embodiment, at least two incomplete structures are processed simultaneously in a same completion station.

According to a preferred embodiment, at least two incomplete structures are subjected simultaneously to the step (iv) involving the formation of at least one constituent element of the tire in the same completion station.

In the case where the tire to be produced also requires a belt structure, in the process according to the invention the step (i) also comprises the steps of:
(i-c) manufacturing a belt structure;
(i-d) associating said belt structure with said carcass structure.

In this case, the step (i-d) of associating the belt structure with the carcass structure may be performed before, after or at the same time as the step (i-b) involving shaping of the carcass structure with a substantially toroidal shape.

According to a further aspect, the invention relates to a plant for producing tires, comprising:
at least one assembly line for the production of incomplete green tire structures having a substantially toroidal shape, which comprises: at least one apparatus for building carcass structures in the form of a substantially cylindrical sleeve; and at least one apparatus for shaping said carcass structures so as to have a substantially toroidal shape; said carcass structures comprising at least one carcass ply operationally associated with annular reinforcing structures axially spaced from each other;
at least one storage station for temporarily storing the incomplete structures produced by said at least one assembly line;
at least one completion station comprising: at least one member for supplying a continuous long element of crude elastomer material; and at least two units for handling the incomplete structures supplied by said assembly line, said handling units being able to impart, to said incomplete structures, a rotational movement about at least one axis of the incomplete structure and a translatory movement with respect to said at least one supplying member, so as to form on said incomplete structures at least one constituent element of the tire laying down said continuous long element along a predetermined path.

According to a further aspect, the invention relates to a station for completion of incomplete green tire structures, which comprises:
at least one member for supplying a continuous long element of crude elastomer material;
at least two units for handling incomplete green tire structures, said handling units being able to impart, to said incomplete structures, a rotational movement about at least one axis of said incomplete structure and a translatory movement with respect to said at least one supplying member, so as to form on said incomplete structures at least one constituent element of the tire laying down said continuous long element along a predetermined path.

According to a preferred embodiment, said completion station comprises at least two members for supplying a continuous long element.

Further characteristic features and advantages will appear more clearly from the detailed description of a preferred, but not exclusive embodiment of a process and a plant for the production of tires for vehicle wheels in accordance with the present invention.

This description will be given here with reference to the accompanying drawings which are provided solely by way of a non-limiting example and in which:
- Fig. 1 shows schematically from above a plant for the production of tires in accordance with the present invention;
- Fig. 2 shows an elevation view of a completion station forming part of the plant according to Fig. 1;
- Fig. 3 shows in schematic form a partial cross-sectional view of a tire which can be obtained in accordance with the present invention.

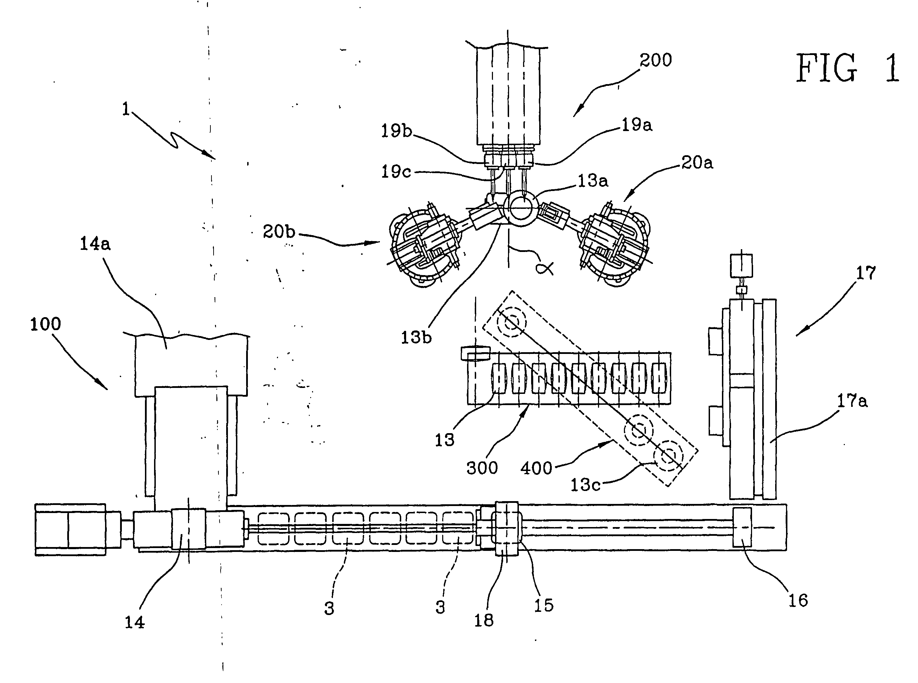

With particular reference to Figure 1, 1 denotes in its entirety a plant for producing tires in accordance with the present invention, which comprises an assembly line 100, a completion station 200 and a storage station 300.

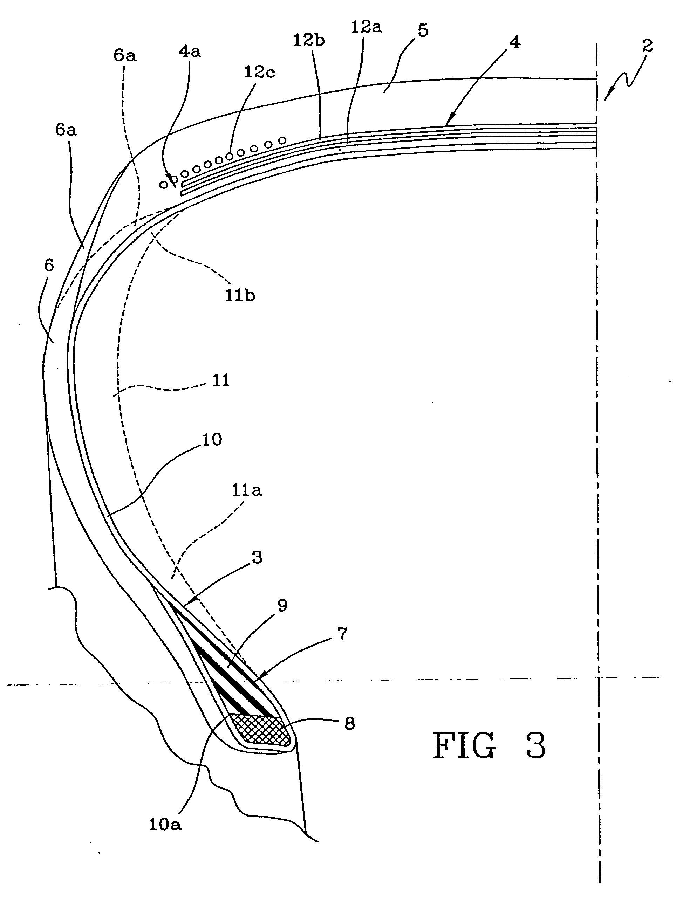

The invention is intended for the manufacture of tires in general, for example tires of the type denoted overall by 2 in Figure 3, comprising essentially a carcass structure 3 with a substantially toroidal shape, a belt structure 4 extending circumferentially in a radially external position around the carcass structure 3, a tread band 5 applied to the belt structure 4 in a radially external position, and a pair of sidewalls 6 applied laterally onto the carcass structure 3 on opposite sides and each extending from a lateral edge of the tread band to a zone close to a radially internal edge of the said carcass structure.

Each sidewall 6 may have an associated radially external end portions 6a at least partially covered by the end of the tread band 5, as indicated by the broken line in Figure 3, in accordance with a constructional arrangement of the type which is usually known as "underlying sidewalls". Alternatively, the radially external end portions 6a of the sidewalls 6 may be laterally superimposed on the corresponding ends of the tread band 5, as indicated by the continuous line in Figure 3, so as to form a constructional arrangement of the type usually known as "overlying sidewalls".

The carcass structure 3 comprises a pair of annular reinforcing structures 7 which are incorporated in the zones usually referred to as "beads" and each composed, for example, of a substantially circumferential, annular, reinforcing insert 8 - usually called "bead core" - supporting in a radially external position an elastomer filling 9. The terminal edges 10a of one or more carcass plies 10 are folded back around each of the annular reinforcing structures, said plies comprising textile or metal cords extending transversely with respect to the circumferential direction of the tire 2, if necessary with a predetermined inclination, from one to the other of the annular reinforcing structures 7.

In tires which are self-supporting or designed for special uses, it is also possible to envisage auxiliary reinforcing inserts, for example of the type usually called "lunette", applied in the vicinity of the sidewalls 6 on the inside of the carcass ply 10 or between two carcass plies joined together. As indicated by the broken line 11 in Figure 3, these auxiliary elastic support inserts each have a radially internal edge 11a arranged in the vicinity of one of the annular reinforcing structures 7 and a radially external edge 11b arranged in the vicinity of a side edge 4a of the belt structure 4.

The belt structure 4 may, in turn, comprise one or more belt layers 12a, 12b comprising metal or textile cords suitably inclined with respect to the circumferential extension of the tire, in respectively intersecting directions between one belt layer and the next, as well as an optional external belt layer 12c comprising one or more cords wound circumferentially in axially adjacent turns around the belt layers 12a, 12b. Each of the sidewalls 6 and the tread band 5 essentially comprise at least one layer of elastomer material of suitable thickness. The tread band 5 may also have, associated therewith, a so-called underlayer (not shown) of elastomer material having a suitable composition and physical/chemical properties and acting as an interface between the actual tread band and the underlying belt structure 4.

The individual components of the carcass structure 3 and the belt structure 4, such as in particular the annular reinforcing structures 7, the carcass plies 10, the belt layers 12a, 12b and any other reinforcing elements intended to form the external belt layer 12c, are fed to the plant 1 in the form of semifinished products produced during previous processing steps, so that they can be suitably assembled together.

The assembly line 100 comprises in general a building drum 14 on which the carcass ply or plies 10 are firstly wound, said ply or plies being supplied from a feeding apparatus 14a (not described in detail since it may be realized using methods well known in the art) along which they are cut into sections of suitable length related to the circumferential extension of the building drum 14, before being applied thereon so as to form a substantially cylindrical so-called "carcass sleeve". The annular reinforcing structures 7 are fitted onto the terminal edges 10a of the plies 10 and the said terminal edges are then folded back so as to cause engagement of the reinforcing structures inside the backfolds consequently formed by the plies 10. If required, the assembly line 100 may comprise devices for associating with the carcass ply or plies 10 auxiliary reinforcing inserts which are applied during preliminary steps or inserted during the steps involving deposition of the ply or plies 10 and/or other components of the carcass structure 3. In particular, it is possible to envisage the application of the abovementioned auxiliary elastic reinforcing inserts or "lunettes" 11 directly onto the building drum 14 before application of the carcass ply or plies 10 or onto one of the carcass plies before application of an additional carcass ply 10.

Once assembly of the components has been completed, transfer devices (not shown) remove the carcass structure 3 from the building drum 14 and transfer it onto a shaping drum 15.

Alternatively, assembly of the components of the carcass structure 3 may be performed directly on the shaping drum 15, which therefore also performs the function of a building drum: in such a case the drum 15 is of the type referred to as "unistage" and the carcass ply or plies 10 supplied from the feeding apparatus 14a and the annular reinforcing structures 7 are assembled directly thereon, without therefore using the building drum 14.

The belt structure is usually formed on an auxiliary drum 16 and subsequently associated with the carcass structure 2. More particularly, it is envisaged for this purpose that the auxiliary drum 16 is able to interact with devices 17 for application of the belt structure 4 which may, for example, comprise at least one feeding apparatus 17a along which semifinished products in the form of a continuous strip are fed and then cut into sections having a length corresponding to the circumferential extension of the auxiliary drum 16 at the same time as formation of the corresponding belt layers 12a, 12b thereon. An assembly (not shown in the figures) feeding one or more additional reinforcing inserts, such as for example continuous cords to be applied on top of the belt layers 12a, 12b so as to form the external belt layer 12c in the form of axially adjacent circumferential turns, may also be combined with the apparatus 17a feeding the belt layers.

Upon actuation of suitable transfer devices, the belt structure 4 arranged on the auxiliary drum 16 is disengaged from the latter and transferred onto the carcass structure arranged in the form of a cylindrical sleeve on the shaping drum 15. The transfer devices may for example comprise a transfer member 18 with a substantially annular shape (commonly called "transfer device") which is moved until it is arranged around the auxiliary drum 16 so as to remove the belt structure 4 from the latter. In a manner known per se, the auxiliary drum 16 disengages the belt structure 4 which is then moved by the transfer member 18 and arranged in a coaxially centered position on the shaping drum 15 supporting the carcass structure 3. It may be envisaged that the shaping drum 15 is able to interact with the transfer member 18 following a movement of the shaping drum itself, from a position where it is able to interact with the devices designed to engage the carcass structure 3 thereon.

The carcass structure 3 is then shaped in a toroidal configuration by moving the annular reinforcing structures 7 axially towards each other and simultaneously introducing fluid under pressure therein so as to bring the carcass ply or plies 10 into contact with the internal surface of the belt structure 4 retained by the transfer member 18. A rolling step, which can be performed in any suitable manner, may be carried out on the belt structure 4 after the shaping step or simultaneously therewith, so as to obtain better adhesion of the belt layers 12a, 12b, 12c against the carcass ply or plies 10.

Each incomplete green tire structure 13 is then transferred to a storage station 300 and then to the completion station 200.

According to a preferred embodiment of the process according to the invention, the incomplete structures 13 are disengaged from the shaping drum 15 and placed manually or using automated transportation devices in the storage station 300 adjacent to the completion station 200, pending transfer to the completion station 200.

According to an alternative embodiment, the incomplete structures 13 are kept on the shaping drum 15 and placed manually or using automated transportation devices in the storage station 300.

The storage stations 300 may comprise one or more manually operated carriages or one or more automatic or semi-automatic platforms (schematically shown in Figure 1) on which the incomplete structures 13 are arranged.

Transfer of the incomplete structures 13 to the completion station 200 (where the incomplete structures being processed are indicated by 13a, 13b) is preferably performed by means of the handling members 20a, 20b (described in detail below) which remove in sequence each incomplete green tire structure and subject it to the action of the supplying members 19a, 19b, 19c.

For this purpose, each handling member 20a, 20b is provided, at the end of the automated arm 21, with a support member 15a, 15b on which the incomplete structure 13a, 13b is supported and moved. The support member 15a, 15b may be formed, for example, by a drum on which the incomplete structure 13 is transferred after each storage step. This drum generally has a structure similar to that used for shaping (and if necessary also building) the incomplete structure itself.

Alternatively, the support member 15a, 15b is the same shaping drum 15 on which each incomplete structure 13a, 13b has been shaped (and if necessary also built). In this case, as already mentioned above, after the assembly step, each incomplete tire structure 13a, 13b remains engaged on its shaping drum 15 and is thus transferred to the storage station 300 and then to the completion station 200 for application of at least one constituent element of the tire. The shaping drum 15, once disengaged from the green tire 13c obtained after completion, is brought back to the assembly line 100 where it is reused in order to produce another tire structure 13.

It should be commented that completion of the abovementioned green tire structures 13a, 13b requires the application of at least one constituent element of the tire 2 such as, for example, the tread band, underlayer, sidewalls or anti-abrasive strip. Below, by way of example, only deposition of the tread band and the sidewalls is described, but using the same procedures it is possible to deposit on the abovementioned incomplete tire structures all the constituent elements of elastomer material necessary for completion of the abovementioned tire 2.

In accordance with the present invention, at least one of the steps involving application of a constituent element of the tire, for example the tread band 5 and/or sidewalls 6, is performed by depositing at least one continuous long element of crude elastomer material along a predetermined path, preferably in circumferential turns around a geometrical axis (preferably an axis of substantial radial symmetry) of said incomplete tire structure.

Preferably, both application of the tread band 5 and application of the sidewalls 6 are performed using the abovementioned procedure, as will be described more fully below. It is also possible, however, to form the sidewalls 6 in another manner, for example by means of an apparatus for feeding the sidewalls (not shown in the figures), which is associated with the work station and designed to feed at least one semifinished product in the form of a continuous strip of elastomer material, from which the sidewalls themselves are cut in the form of sections of predetermined length depending on the circumferential extension of the building drum 15 and the tire 2 to be obtained. The tread band 5 may in turn be directly produced against the belt structure 4 formed on the auxiliary drum 16, for example by means of an apparatus for feeding a semifinished product in the form of a continuous strip, from which the tread bands are obtained by means of operations involving cutting of sections of suitable length.

In a preferred alternative solution, inside the said completion station 200, at least two, more preferably three, supplying members 19a, 19b, 19c are present, said supplying members being each designed to deposit a respective continuous long element of crude elastomer material onto the incomplete structure 13a, 13b preferably in a position axially on the outside of said carcass structure 3 and/or in a position radially on the outside of said belt 4. Each supplying member 19a, 19b, 19c may for example comprise an extruder, an application roller or other member which, when positioned adjacent to the tire being processed, delivers and deposits the continuous long element of crude elastomer material directly against the incomplete structure 13a, 13b, at the same time as winding of the said long element about an axis of said incomplete structure 13a, 13b.

More particularly, at least one supplying member 19a forming part of a unit for applying the tread band 5 to the belt structure 4 in a radially external position is envisaged. The first supplying member 19a may be designed to supply a first continuous long element directly against the belt structure 4, so as to form the tread band 5.

When the manufacture of the tread band 5 requires the formation of a so-called underlayer, a second supplying member 19b may be envisaged for depositing directly against the belt structure 4, before the intervention of the first supplying member 19a, a second long element intended to form the abovementioned underlayer of elastomer material.

A third supplying member 19c, forming part of a unit for applying sidewalls 6 to the carcass ply or plies 10 in an axially external position, is also preferably envisaged. The third supplying member 19c is designed to supply a third continuous long element directly against the carcass ply 10.

In a different embodiment it is possible to envisage that the abovementioned three supplying members 19a, 19b and 19c are intended to form, respectively, a first tread band, a second tread band and the sidewalls. In this case the handling unit 20a will bring the incomplete structure 13a associated therewith into the vicinity of the members 19a and 19c, while the handling unit 20b will bring the incomplete structure 13b associated therewith into the vicinity of the members 19b and 19c. In this way it will be possible to perform simultaneous processing of two tires having for example tread bands composed of mixes which are different from each other.

In said completion station 200, each handling unit 20a, 20b interacts with the supplying members 19a, 19b, 19c in order to produce the missing constituent element or elements, for example the tread band 5 and/or sidewalls 6. Each handling unit 20a, 20b in fact operates a support member 15a, 15b supporting said incomplete structure 13a, 13b so as to cause it to rotate about its geometrical axis (preferably an axis of substantial radial symmetry) so that each of the long elements is distributed circumferentially with respect to the abovementioned incomplete structure 13a, 13b. Simultaneously, the handling unit 20a, 20b performs controlled relative movements of the incomplete structure 13a, 13b and the supplying member 19a, 19b, 19c so as to distribute the long element in circumferential turns, thus forming the tread band 5 and/or sidewall 6 in accordance with desired thickness and geometrical form requirements.

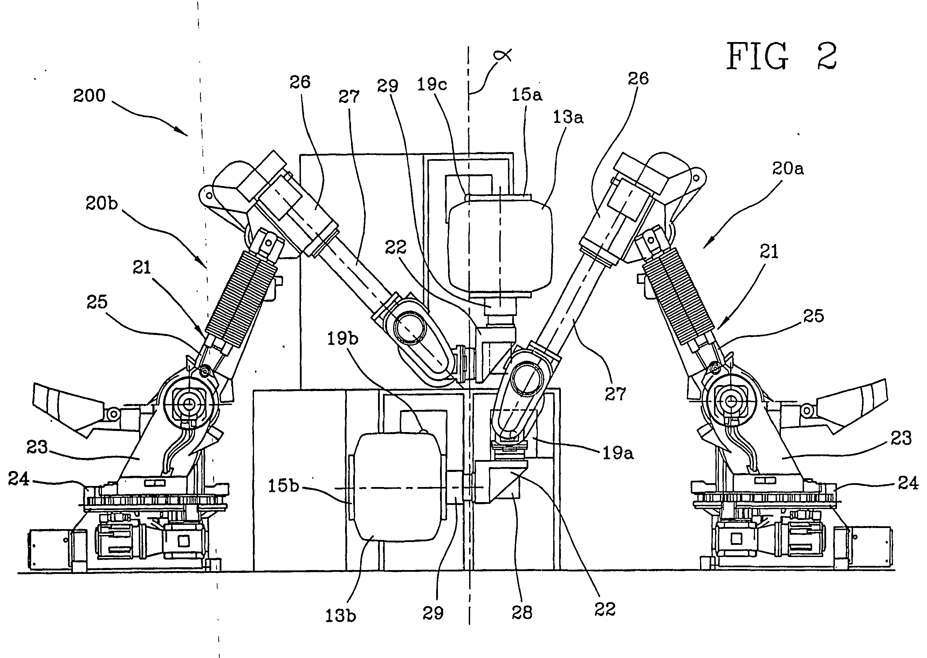

In a preferred constructional solution, illustrated in Figures 1 and 2, each handling unit 20a, 20b is incorporated in at least one automated arm 21 carrying a terminal head 22 to which the support member 15a, 15b is fixed in cantilever fashion, for example by means of a shank 29 coinciding with its geometrical axis. In the example shown (Figure 2), the automated arm 21 comprises a base 23 rotatable on a fixed platform 24 about a first vertical axis, a first section 25 constrained to the base 23 in an oscillating manner about a second - preferably horizontal - axis, a second section 26 constrained in an oscillating manner to the first section 25 about a third axis, which is also preferably horizontal, and a third section 27 rotatably supported by the second section 26 along an axis perpendicular to the third axis of oscillation. The head 22 of the automated arm 21 is constrained at the end to the third section 27, with the possibility of oscillation about a fifth and a sixth axis of oscillation which are perpendicular to each other, and rotatably supports the primary drum 15 which can be rotationally actuated by a motor 28.

The automated arm 21 transports and suitably moves the incomplete structure 13a, 13b in front of the second supplying member 19b (if applicable) intended for formation of the underlayer and, subsequently, in front of the first supplying member 19a, upon actuation of which formation of the tread band 5 is completed.

The incomplete structure 13a, 13b is then transferred to the third supplying member 19c and suitably moved in front of the latter in order to perform formation of one of the sidewalls 6 laterally against the carcass structure 3, roughly starting from the annular reinforcing structure 7 as far as the corresponding lateral edge of the tread band 5 previously formed. Following overturning of the incomplete structure 13a, 13b in front of the third supplying member 19c, formation of the second sidewall 6 is initiated, on the side of the carcass structure 3 opposite to the sidewall 6 previously formed.

The operative sequence described above allows the formation of the sidewalls 6 with their radially external end portions 6a laterally superimposed on the side edges of the tread band 5 in accordance with a constructional arrangement of the type normally called "overlying sidewalls".

According to the invention it is possible to obtain, however, in an equally simple manner, formation of the sidewalls 6 in a constructional arrangement of the type usually called "underlying sidewalls".

For this purpose, immediately after engagement of the belt structure 4 with the carcass structure 3, the incomplete structure 13a, 13b is transferred in front of the third supplying member 19c in order to carry out formation of the sidewalls 6, before being brought in front of the second supplying member 19b (if applicable) and the first supplying member 19a in order to form the tread band 5. The opposite side edges of the tread band 5 thus obtained will be superimposed on the radially external end portions 6a of the sidewalls 6.

During the course of processing, each of the supplying members 19a, 19b, 19c remains preferably in a fixed position, while the incomplete structures 13a, 13b are made to rotate and suitably moved in a transverse direction by means of the automated arm 21 which operates the support member 15a, 15b so as to cause the distribution of each continuous long element on the incomplete structure 13a, 13b so as to compose a layer of suitable shape and thickness on top of the carcass structure 3 and/or belt structure 4.

The continuous long element supplied by each of the supplying members 19a, 19b, 19c is preferably deposited in partially superimposed turns and may advantageously have a tapered flattened section so as to be able to regulate the thickness of the elastomer layer formed by varying the degree of overlapping of the turns and/or the direction of the surface of the incomplete tire structure with respect to the cross-sectional profile of the long element supplied by the supplying member itself.

Once formation of the tread band 5 and the sidewalls 6 has been completed, the automated arm 21 again transfers the incomplete structure 13a, 13b (which at this point is a complete green tire and will be indicated by 13c) so as to move it away from the supplying members 19a, 19b, 19c and position it in front of devices which disengage the green tire 13c from the support member 15a, 15b.

In the plant 1 according to the present invention an unloading station 400 is preferably envisaged, wherein the green tires 13c, after being disengaged from the respective support members 15a, 15b, are temporarily stored so that they can then be transferred to the final molding and vulcanization step (not described here in detail in that it may be performed using techniques which are well-known in the art). The unloading station 400 may be designed in a similar manner to the storage station 300, as described above. In Figure 1 the unloading station 400 is shown in broken lines and inclined with respect to the storage station 300 only for the purposes of clarity of the drawing. The unloading station 400 may, for example, be arranged aligned with the storage station 300 at a different vertical height so as to facilitate the handling of the tire structures by the handling units 20a, 20b.

In accordance with the present invention, each completion station of the plant 1 is designed to perform simultaneously the processing of at least two incomplete structures. For this purpose, as can be seen in Figures 1 and 2, the completion station 200 envisages a first and a second handling unit 20a,20b which move respectively a first and a second incomplete tire structure 13a, 13b, each supported on a support member 15a, 15b. In this way the incomplete structures 13a, 13b may be brought sequentially into the vicinity of the supplying members 19a, 19b and 19c.

According to a possible embodiment, each completion station 200 envisages that the supplying members 19a, 19b, 19c are arranged in such a way that the respective long elements of crude elastomer material are supplied substantially at the same height with respect to the support surface of the completion station 200.

According to a preferred embodiment (as shown in Figures 1 and 2), the completion station comprises three supplying members 19a, 19b and 19c. Preferably two of them, for example the members 19a and 19b, are arranged so that the respective long elements made of crude elastomer material are supplied substantially at the same height, while the third supplying member 19c is arranged so that the respective long element of crude elastomer material is supplied at a height vertically higher than the height of the first two supplying members 19a and 19b, the heights being defined with respect to the support surface of the completion station 200.

According to a preferred embodiment, in the completion station 200, the supplying members 19a, 19b and 19c are arranged symmetrically with respect to a same plane of vertical symmetry (indicated by "α" in Figures 1 and 2). Preferably the handling units 20a, 20b are also arranged symmetrically with respect to the same plane of vertical symmetry "α" (see Figures 1 and 2).

In this way the handling units 20a, 20b inside the same completion station 200 may simultaneously process two incomplete tire structures without problems of mechanical interference between them, reducing the time required for completion of the green tires and consequently the time spent by each incomplete structure inside the storage station 300.

Moreover, the simultaneous processing of at least two incomplete structures allows full use to be made of the machine stoppage time of the assembly line 100, which is longer than that of the completion station 200, increasing the overall productivity of the plant 1 to values at least close to the productivity of the assembly line 100.

Moreover, as a result of the symmetrical arrangement of the supplying members 19a, 19b and 19c and the handling units 20a, 20b with respect to the vertical plane of symmetry "α", it is possible to manage the loading and unloading steps of the completion station 200 in a different area from that of the processing area (for example, as shown in Figure 1, on opposite sides with respect to the handling units 20a, 20b) and use the single storage station 300 (from which the incomplete structures are loaded) and a single unloading station 400 for both the handling units 20a, 20b, with an obvious advantage for management of the plant 1.

Owing to the modular nature of the plant according to the present invention, it is possible to associate and manage effectively several assembly lines and/or several completion stations and vary the configuration according to the production requirements. For example, in the case where the production of high-quality tires (for example high-performance tires intended for primary fitting) with a high productivity is required, the plant 1 may be designed so that each assembly line 100 has, associated with it, at least two completion stations 200. In this way the entire production resulting from the assembly line is completed laying down long elements as described above, so as to provide high-quality products with a low number of rejects.

On the other hand, if a standard production performance is required of the plant (for example intended for change-over) whereas the time assigned to high-quality production is less compared to the total production time, at least two assembly lines may be associated with each completion station. In this case, the completion station is programmed to receive small batches supplied from the various assembly lines, while each assembly line is structured so that it is possible to complete the green tire structures with a tread band and/or sidewalls from semifinished products using traditional methods.

## Claims

1. Process for producing tires, comprising the following steps:
(i) in at least one assembly line (100), producing in sequence, incomplete green tire structures (13, 13a, 13b) having a substantially toroidal shape, the production of each incomplete structure (13, 13a, 13b) comprising:
(i-a) building a carcass structure (3) in the form of a substantially cylindrical sleeve comprising at least one carcass ply (10) operationally associated with annular reinforcing structures (7) which are axially spaced from each other;
(i-b) shaping the carcass structure (3) so as to have a substantially toroidal shape;
(ii) temporarily storing the incomplete structures (13, 13a, 13b) produced by said at least one assembly line (100);
(iii) transferring the incomplete structures (13, 13a, 13b) to at least one completion station (200);
(iv) in said at least one completion station (200), forming on each incomplete structure (13, 13a, 13b) at least one constituent element of the tire laying down at least one continuous long element of crude elastomer material along a predetermined path;
(v) subjecting the green tires (13c) thus produced to a vulcanization step.

2. Process as claimed in claim 1, wherein at least two incomplete structures (13, 13a, 13b) are processed simultaneously in a same completion station (200).

3. Process as claimed in claim 1 or 2, wherein at least two incomplete structures (13, 13a, 13b) are subjected simultaneously to the step (iv) involving the formation of at least one constituent element of the tire in the same completion station (200).

4. Process as claimed in any one of the preceding claims wherein the step (i) also comprises the steps of:
(i-c) manufacturing a belt structure (4) ;
(i-d) associating said belt structure (4) with said carcass structure (3).

5. Process as claimed in claim 4, wherein the step (i-d) of associating said belt structure (4) with said carcass structure (3) is performed before the step (i-b) of shaping the carcass structure (3) with a substantially toroidal shape.

6. Process as claimed in claim 4, wherein the step (i-d) of associating said belt structure (4) with said carcass structure (3) is performed after the step (i-b) of shaping the carcass structure (3) with a substantially toroidal shape.

7. Process as claimed in claim 4, wherein the step (i-d) of associating said belt structure (4) with said carcass structure (3) is performed at the same time as the step (i-b) of shaping the carcass structure (3) with a substantially toroidal shape.

8. Process as claimed in any one of the preceding claims, wherein the building step (i-a) is performed on a building drum (14) and the shaping step (i-b) is performed on a shaping drum (15).

9. Process as claimed in any one of claims 1 to 7, wherein the building step (i-a) and the shaping step (i-b) are both performed on the same building and shaping drum.

10. Process as claimed in any one of the preceding claims, wherein the temporary storage step (ii) is performed in a storage station (300).

11. Process as claimed in claim 8 or 9, wherein, before the temporary storage step (ii), the incomplete structures (13, 13a, 13b) are disengaged from the shaping or building and shaping drum (15).

12. Process as claimed in any one of the preceding claims, wherein, during the deposition formation step (iv), each incomplete structure (13, 13a, 13b) is supported on a respective support member (15a, 15b).

13. Process as claimed in claim 12, wherein the support member (15a, 15b) is the shaping or building and shaping drum (15).

14. Process as claimed in any one of the preceding claims, wherein the formation step (iv) is performed laying down the long element in circumferential turns around an axis of said incomplete structure (13, 13a, 13b).

15. Process as claimed in claim 14, wherein said turns are partially superimposed.

16. Process as claimed in any one of the preceding claims, wherein said constituent element of the tire (2) is chosen from among: tread band, tread band underlayer, sidewalls and anti-abrasive strip.

17. Process as claimed in claim 16, wherein the tread band and sidewalls are formed in accordance with step (iv) on each incomplete structure (13, 13a, 13b).

18. Process as claimed in claim 16, wherein the tread band, the tread band underlayer and the sidewalls are formed in accordance with step (iv) on each incomplete structure (13, 13a, 13b).

19. Process as claimed in any one of the preceding claims, wherein each incomplete structure (13, 13a, 13b) is moved inside the completion station with a rotational movement about at least one axis of the incomplete structure (13, 13a, 13b) and a translatory movement with respect to at least one supplying member (19a, 19b, 19c) of the continuous long element.

20. Process as claimed in any one of the preceding claims, wherein the green tires produced in accordance with step (iv) are disengaged from the support member (15a, 15b) and temporarily stored before being conveyed to the vulcanization step (v).

21. Process as claimed in any one of the preceding steps, wherein the incomplete structures (13, 13a, 13b) supplied from an assembly line (100) are transferred to at least two completion stations (200).

22. Process as claimed in any one of claims 1 to 20, wherein batches of incomplete structures (13, 13a, 13b) supplied from at least two assembly lines (100) are transferred to a completion station (200).

23. Plant for producing tires, comprising:
at least one assembly line (100) for the production of incomplete green tire structures (13, 13a, 13b) having a substantially toroidal shape, which comprises: at least one apparatus for building carcass structures (3) in the form of a substantially cylindrical sleeve; and at least one apparatus for shaping said carcass structures (3) so as to have a substantially toroidal shape; said carcass structures (3) comprising at least one carcass ply (10) operationally associated with annular reinforcing structures (7) axially spaced from each other;
at least one storage station (300) for temporarily storing the incomplete structures (13, 13a, 13b) produced by said at least one assembly line (100);
at least one completion station (200) comprising: at least one member (19a, 19b, 19c) for supplying a continuous long element of crude elastomer material; and at least two units (20a, 20b) for handling the incomplete structures (13, 13a, 13b) supplied by said assembly line (100), said handling units (20a, 20b) being able to impart, to said incomplete structures (13, 13a, 13b), a rotational movement about at least one axis of the incomplete structure (13, 13a, 13b) and a translatory movement with respect to said at least one supplying member (19a, 19b, 19c), so as to form on said incomplete structures (13, 13a, 13b) at least one constituent element of the tire laying down said continuous long element along a predetermined path.

24. Plant as claimed in claim 23, wherein said apparatus for building carcass structures (3) is a building drum (14).

25. Plant as claimed in claim 23, wherein said apparatus for shaping said carcass structure (3) with a substantially toroidal shape is a shaping drum (15).

26. Plant as claimed in claim 23, wherein said apparatus for building said carcass structure (3) and said apparatus for shaping said carcass structure (3) are incorporated in a unistage drum.

27. Plant as claimed in any one of claims 23 to 26, wherein said assembly line (100) comprises at least one auxiliary drum (16) for forming a belt structure (4).

28. Plant as claimed in claim 27, wherein said assembly line (100) comprises at least one transfer member (18) for transferring said belt structure (4) into a position radially on the outside of said carcass structure (3).

29. Plant as claimed in any one of claims 23 to 28, also comprising an unloading station (400) for the green tires (13c) produced by said at least one completion station (200).

30. Plant as claimed in any one of claims 23 to 29, wherein at least one completion station (200) comprises at least two supplying members (19a, 19b, 19c).

31. Plant as claimed in claim 30, wherein said at least one completion station (200) comprises three supplying members (19a, 19b, 19c).

32. Plant as claimed in claim 30 or 31, wherein a first supplying member (19a) and a second supplying member (19b) are arranged so that the respective long elements of crude elastomer material are supplied substantially at the same height.

33. Plant as claimed in claim 32, wherein a third supplying member (19c) is arranged so that the respective long element of crude elastomer material is supplied at a height vertically greater than the height of the first supplying member (19a) and second supplying member (19b).

34. Plant as claimed in any one of claims 30 to 33, wherein said at least two supplying members (19a, 19b, 19c) are arranged symmetrically with respect to a same vertical plane of symmetry (α).

35. Plant as claimed in claim 34, wherein said at least two handling units (20a, 20b) are arranged symmetrically with respect to said vertical plane of symmetry (α).

36. Plant as claimed in any one of claims 23 to 35, wherein at least two completion stations (200) are associated with each assembly line (100).

37. Plant as claimed in any one of claims 23 to 35, wherein at least two assembly lines (100) are associated with each completion station (200).

38. Completion station comprising: at least one member (19a, 19b, 19c) for supplying a continuous long element of crude elastomer material; and at least two units (20a, 20b) for handling incomplete structures (13, 13a, 13b) of green tires, said handling units (20a, 20b) being able to impart, to said incomplete structures (13, 13a, 13b), a rotational movement about at least one axis of the incomplete structure (13, 13a, 13b) and a translatory movement with respect to said at least one supplying member (19a, 19b, 19c) so as to form on said incomplete structures (13, 13a, 13b) at least one constituent element of the tire laying down said continuous long element along a predetermined path.

39. Completion station as claimed in claim 38, comprising at least two supplying members (19a, 19b, 19c).

40. Completion station as claimed in claim 39, comprising three supplying members (19a, 19b, 19c).

41. Completion station as claimed in claim 39 or 40, wherein a first supplying member (19a) and second supplying member (19b) are arranged so that the respective long elements of crude elastomer material are supplied substantially at the same height.

42. Completion station as claimed in claim 41, wherein a third supplying member (19c) is arranged so that the respective long element of crude elastomer material is supplied at a height vertically greater than the height of the first supplying member (19a) and the second supplying member (19b).

43. Completion station as claimed in any one of claims 39 to 42, wherein said at least two supplying members (19a, 19b, 19c) are arranged symmetrically with respect to a same vertical plane of symmetry (α).

44. Completion station as claimed in claim 43, wherein said at least two handling units (20a, 20b) are arranged symmetrically with respect to said vertical plane of symmetry (α).

## Revendications

1. Procédé de fabrication de pneus, comprenant les étapes suivantes :
(i) sur au moins une chaîne de montage (100), produire en séquence des structures de pneus non vulcanisés incomplètes (13, 13a, 13b) ayant une forme substantiellement toroïdale, la production de chaque structure incomplète (13, 13a, 13b) comprenant les étapes consistant à :
(i-a) construire une structure de carcasse (3) sous la forme d'un manchon substantiellement cylindrique comprenant au moins une nappe de carcasse (10) associée fonctionnellement à des structures de renforcement annulaires (7) qui sont espacées axialement les unes des autres ;
(i-b) former la structure de carcasse (3) pour qu'elle ait une forme substantiellement toroïdale ;
(ii) stocker temporairement les structures incomplètes (13, 13a, 13b) produites par ladite au moins une chaîne de montage (100) ;
(iii) transférer les structures incomplètes (13, 13a, 13b) vers au moins un poste terminal (200) ;
(iv) dans ledit au moins un poste terminal (200), former sur chaque structure incomplète (13, 13a, 13b) au moins un élément constitutif du pneu en déposant au moins un long élément continu en matériau élastomère cru le long d'un chemin prédéterminé ;
(v) soumettre les pneus non vulcanisés (13c) ainsi produits à une étape de vulcanisation.

2. Procédé selon la revendication 1, dans lequel au moins deux structures incomplètes (13, 13a, 13b) sont traitées simultanément dans un même poste terminal (200).

3. Procédé selon la revendication 1 ou 2, dans lequel au moins deux structures incomplètes (13, 13a, 13b) sont soumises simultanément à l'étape (iv) impliquant la formation d'au moins un élément constitutif du pneu dans le même poste terminal (200).

4. Procédé selon l'une quelconque des revendications précédentes, dans lequel l'étape (i) comprend aussi les étapes consistant à :
(i-c) fabriquer une structure de ceinture (4) ;
(i-d) associer ladite structure de ceinture (4) à ladite structure de carcasse (3).

5. Procédé selon la revendication 4, dans lequel l'étape (i-d) d'association de ladite structure de ceinture (4) avec ladite structure de carcasse (3) est exécutée avant l'étape (i-b) de mise en forme de la structure de carcasse (3) avec une forme substantiellement toroïdale.

6. Procédé selon la revendication 4, dans lequel l'étape (i-d) d'association de ladite structure de ceinture (4) avec ladite structure de carcasse (3) est exécutée après l'étape (i-b) de mise en forme de la structure de carcasse (3) avec une forme substantiellement toroïdale.

7. Procédé selon la revendication 4, dans lequel l'étape (i-d) d'association de ladite structure de ceinture (4) avec ladite structure de carcasse (3) est exécutée en même temps que l'étape (i-b) de mise en forme de la structure de carcasse (3) avec une forme substantiellement toroïdale.

8. Procédé selon l'une quelconque des revendications précédentes, dans lequel l'étape de construction (i-a) est exécutée sur un tambour de construction (14) et l'étape de formation (i-b) est exécutée sur un tambour de formation (15).

9. Procédé selon l'une quelconque des revendications 1 à 7, dans lequel l'étape de construction (i-a) et l'étape de formation (i-b) sont toutes deux exécutées sur le même tambour de construction et de formation.

10. Procédé selon l'une quelconque des revendications précédentes, dans lequel l'étape de stockage temporaire (ii) est effectuée dans un poste de stockage (300).

11. Procédé selon la revendication 8 ou 9, dans lequel, avant l'étape de stockage temporaire (ii), les structures incomplètes (13, 13a, 13b) sont dégagées du tambour de formation ou du tambour de construction et de formation (15).

12. Procédé selon l'une quelconque des revendications précédentes, dans lequel, pendant l'étape de formation de dépôt (iv), chaque structure incomplète (13, 13a, 13b) est supportée sur un élément de support respectif (15a, 15b).

13. Procédé selon la revendication 12, dans lequel l'élément de support (15a, 15b) est le tambour de formation ou tambour de construction et de formation (15).

14. Procédé selon l'une quelconque des revendications précédentes, dans lequel l'étape de formation (iv) est exécutée en déposant l'élément long en spires périphériques autour d'un axe de ladite structure incomplète (13, 13a, 13b).

15. Procédé selon la revendication 14, dans lequel lesdites spires sont partiellement superposées.

16. Procédé selon l'une quelconque des revendications précédentes, dans lequel ledit élément constitutif du pneu (2) est choisi parmi : bande de roulement, sous-couche de bande de roulement, flancs et bande anti-abrasive.

17. Procédé selon la revendication 16, dans lequel la bande de roulement et les flancs sont formés selon l'étape (iv) sur chaque structure incomplète (13, 13a, 13b).

18. Procédé selon la revendication 16, dans lequel la bande de roulement, la sous-couche de bande de roulement et les flancs sont formés selon l'étape (iv) sur chaque structure incomplète (13, 13a, 13b).

19. Procédé selon l'une quelconque des revendications précédentes, dans lequel chaque structure incomplète (13, 13a, 13b) est déplacée à l'intérieur du poste terminal avec un mouvement de rotation autour d'au moins un axe de la structure incomplète (13, 13a, 13b) et un mouvement de translation par rapport à au moins un élément de distribution (19a, 19b, 19c) du long élément continu.

20. Procédé selon l'une quelconque des revendications précédentes, dans lequel les pneus non vulcanisés produits selon l'étape (iv) sont dégagés de l'élément de support (15a, 15b) et stockés temporairement avant d'être transportés jusqu'à l'étape de vulcanisation (v).

21. Procédé selon l'une quelconque des revendications précédentes, dans lequel les structures incomplètes (13, 13a, 13b) fournies par une chaîne de montage (100) sont transférées vers au moins deux postes terminaux (200).

22. Procédé selon l'une quelconque des revendications 1 à 20, dans lequel des lots de structures incomplètes (13, 13a, 13b) provenant d'au moins deux chaînes de montage (100) sont transférés vers un poste terminal (200).

23. Usine de fabrication de pneus, comprenant :
au moins une chaîne de montage (100) pour produire des structures de pneus non vulcanisés incomplètes (13, 13a, 13b) ayant une forme substantiellement toroïdale, qui comprend : au moins un appareil pour construire des structures de carcasse (3) sous la forme d'un manchon substantiellement cylindrique, et au moins un appareil pour former lesdites structures de carcasse (3) pour qu'elles aient une forme substantiellement toroïdale, lesdites structures de carcasse (3) comprenant au moins une nappe de carcasse (10) associée fonctionnellement à des structures de renforcement annulaires (7) qui sont espacées axialement les unes des autres ;
au moins un poste de stockage (300) pour stocker temporairement les structures incomplètes (13, 13a, 13b) produites par ladite au moins une chaîne de montage (100) ;
au moins un poste terminal (200) comprenant au moins un élément (19a, 19b, 19c) pour fournir un long élément continu en matériau élastomère cru, et au moins deux unités (20a, 20b) pour manipuler les structures incomplètes (13, 13a, 13b) fournies par ladite chaîne de montage (100), lesdites unités de manipulation (20a, 20b) étant aptes à imprimer auxdites structures incomplètes (13, 13a, 13b) un mouvement de rotation autour d'au moins un axe de la structure incomplète (13, 13a, 13b) et un mouvement de translation par rapport audit au moins un élément de distribution (19a, 19b, 19c), afin de former sur lesdites structures incomplètes (13, 13a, 13b) au moins un élément constitutif du pneu en déposant ledit long élément continu suivant un chemin prédéterminé.

24. Usine selon la revendication 23, dans laquelle ledit appareil pour construire des structures de carcasse (3) est un tambour de construction (14).

25. Usine selon la revendication 23, dans laquelle ledit appareil pour former ladite structure de carcasse (3) avec une forme substantiellement toroïdale est un tambour de formation (15).

26. Usine selon la revendication 23, dans laquelle ledit appareil pour construire ladite structure de carcasse (3) et ledit appareil pour former ladite structure de carcasse (3) sont incorporés dans un tambour à un seul étage.

27. Usine selon l'une quelconque des revendications 23 à 26, dans laquelle ladite chaîne de montage (100) comprend au moins un tambour auxiliaire (16) pour former une structure de ceinture (4).

28. Usine selon la revendication 27, dans laquelle ladite chaîne de montage (100) comprend au moins un élément de transfert (18) pour transférer ladite structure de ceinture (4) dans une position radialement située sur l'extérieur de ladite structure de carcasse (3).

29. Usine selon l'une quelconque des revendications 23 à 28, comprenant aussi un poste de déchargement (400) pour les pneus non vulcanisés (13c) produits par ledit au moins un poste terminal (200).

30. Usine selon l'une quelconque des revendications 23 à 29, dans laquelle au moins un poste terminal (200) comprend au moins deux éléments de distribution (19a, 19b, 19c).

31. Usine selon la revendication 30, dans laquelle ledit au moins un poste terminal (200) comprend trois éléments de distribution (19a, 19b, 19c).

32. Usine selon la revendication 30 ou 31, dans laquelle un premier élément de distribution (19a) et un deuxième élément de distribution (19b) sont placés de telle manière que les éléments longs respectifs en matériau élastomère cru sont fournis substantiellement à la même hauteur.

33. Usine selon la revendication 32, dans laquelle un troisième élément de distribution (19c) est placé de telle manière que l'élément long respectif en matériau élastomère cru est fourni à une hauteur supérieure à celle du premier (19a) et du deuxième (19b) éléments de distribution.

34. Usine selon l'une quelconque des revendications 30 à 33, dans laquelle lesdits au moins deux éléments de distribution (19a, 19b, 19c) sont placés symétriquement par rapport à un même plan de symétrie vertical (α).

35. Usine selon la revendication 34, dans laquelle lesdites au moins deux unités de manipulation (20a, 20b) sont disposées symétriquement par rapport audit plan de symétrie vertical (α).

36. Usine selon l'une quelconque des revendications 23 à 35, dans laquelle au moins deux postes terminaux (200) sont associés à chaque chaîne de montage (100).

37. Usine selon l'une quelconque des revendications 23 à 35, dans laquelle au moins deux chaînes de montage (100) sont associées à chaque poste terminal (200).

38. Poste terminal comprenant : au moins un élément (19a, 19b, 19c) pour fournir un long élément continu en matériau élastomère cru, et au moins deux unités (20a, 20b) pour manipuler des structures incomplètes (13, 13a, 13b) de pneus non vulcanisés, lesdites unités de manipulation (20a, 20b) étant aptes à imprimer auxdites structures incomplètes (13, 13a, 13b) un mouvement de rotation autour d'au moins un axe de la structure incomplète (13, 13a, 13b) et un mouvement de translation par rapport audit au moins un élément de distribution (19a, 19b, 19c), afin de former sur lesdites structures incomplètes (13, 13a, 13b) au moins un élément constitutif du pneu en déposant ledit long élément continu suivant un chemin prédéterminé.

39. Poste terminal selon la revendication 38, comprenant au moins deux éléments de distribution (19a, 19b, 19c).

40. Poste terminal selon la revendication 39, comprenant trois éléments de distribution (19a, 19b, 19c).

41. Poste terminal selon la revendication 39 ou 40, dans lequel un premier élément de distribution (19a) et un deuxième élément de distribution (19b) sont placés de telle manière que les éléments longs respectifs en matériau élastomère cru sont fournis substantiellement à la même hauteur.

42. Poste terminal selon la revendication 41, dans lequel un troisième élément de distribution (19c) est placé de telle manière que l'élément long respectif en matériau élastomère cru est fourni à une hauteur supérieure à celle du premier (19a) et du deuxième (19b) éléments de distribution.

43. Poste terminal selon l'une quelconque des revendications 39 à 42, dans lequel lesdits au moins deux éléments de distribution (19a, 19b, 19c) sont placés symétriquement par rapport à un même plan de symétrie vertical (α).

44. Poste terminal selon la revendication 43, dans lequel lesdites au moins deux unités de manipulation (20a, 20b) sont disposées symétriquement par rapport audit plan de symétrie vertical (α).

## Patentansprüche

1. Verfahren zur Herstellung von Reifen mit den folgenden Schritten, dass
(i) in wenigstens einer Montagestrasse (100) in Folge unfertige Rohrreifenaufbauten (13, 13a, 13b) hergestellt werden, die eine im Wesentlichen torusförmige Gestalt haben, wobei die Herstellung eines jeden unvollständigen Aufbaus (13, 13a, 13b)
(i-a) den Aufbau eines Karkassenaufbaus (3) in Form einer im Wesentlichen zylindrischen Hülse mit wenigstens einer Karkassenlage (10), der funktionsmäßig ringförmige Verstärkungsaufbauten (7) zugeordnet sind, die axial voneinander beabstandet sind, und
(i-b) das Formen des Karkassenaufbaus (3) derart aufweist, dass er eine im Wesentlichen torusförmige Gestalt hat,
(ii) die unvollständigen Aufbauten (13, 13a, 13b), die von der wenigstens einen Montagestrasse (100) erzeugt werden, vorübergehend gelagert werden,
(iii) die unvollständigen Aufbauten (13, 13a, 13b) zu wenigstens einer Vervollständigungsstation überführt werden,
(iv) in der wenigstens einen Vervollständigungsstation (200) an jedem unvollständigen Aufbau (13, 13a, 13b) wenigstens ein Bauelement des Reifens gebildet wird, in dem wenigstens ein fortlaufendes langes Element des rohen Elastomermaterials längs eines vorgegebenen Wegs abgelegt wird, und
(v) die so erzeugten Rohreifen (13c) einem Vulkanisierschritt unterworfen werden.

2. Verfahren nach Anspruch 1, bei welchem wenigstens zwei unvollständige Aufbauten (13, 13a, 13b) gleichzeitig in einer gleichen Vervollständigungsstation behandelt werden.

3. Verfahren nach Anspruch 1 oder 2, bei welchem wenigstens zwei unvollständige Aufbauten (13, 13a, 13b) gleichzeitig dem Schritt (iv) unterworfen werden, zu dem die Bildung wenigstens eines Bauelements des Reifens in der gleichen Vervollständigungsstation (200) gehört.

4. Verfahren nach einem der vorhergehenden Ansprüche, bei welchem der Schritt (i) auch die Schritte aufweist
(i-c) einen Gurtaufbau (4) herzustellen und
(i-d) den Gurtaufbau (4) dem Karkassenaufbau (3) zuzuordnen.

5. Verfahren nach Anspruch 4, bei welchem der Schritt (i-d) der Zuordnung des Gurtaufbaus (4) zu dem Karkassenaufbau (3) ausgeführt wird, bevor der Schritt (i-b) des Ausbildens des Karkassenaufbaus (3) mit einer im Wesentlichen torusförmigen Gestalt ausgeführt wird.

6. Verfahren nach Anspruch 4, bei welchem der Schritt (i-d) der Zuordnung des Gurtaufbaus (4) zu dem Karkassenaufbau (3) nach dem Schritt (i-b) des Ausbildens des Karkassenaufbaus (3) mit einer im Wesentlichen torusförmigen Gestalt ausgeführt wird.

7. Verfahren nach Anspruch 4, bei welchem der Schritt (i-d) der Zuordnung des Gurtaufbaus (4) zu dem Karkassenaufbau (3) gleichzeitig zu dem Schritt (i-b) des Ausbildens des Karkassenaufbaus (3) mit einer im Wesentlichen torusförmigen Gestalt ausgeführt wird.

8. Verfahren nach einem der vorhergehenden Ansprüche, bei welchem der Aufbauschritt (i-a) auf einer Aufbautrommel (14) und der Formgebungsschritt (i-b) auf einer Formtrommel (15) ausgeführt werden.

9. Verfahren nach einem der Ansprüche 1 bis 7, bei welchem der Aufbauschritt (i-a) und der Formgebungsschritt (i-b) beide auf der gleichen Aufbau- und Formgebungstrommel ausgeführt werden.

10. Verfahren nach einem der vorhergehenden Ansprüche, bei welchem der Schritt (ii) der vorübergehenden Lagerung in einer Lagerstation (300) ausgeführt wird.

11. Verfahren nach Anspruch 8 oder 9, bei welchem vor dem Schritt (ii) der vorübergehenden Lagerung die unvollständigen Aufbauten (13, 13a, 13b) aus dem Eingriff mit der Formgebungs- oder Aufbau- und Formgebungstrommel gelöst werden.

12. Verfahren nach einem der vorhergehenden Ansprüche, bei welchem während des Schritts (iv) der Bildung der Ablage jeder unvollständige Aufbau (13, 13a, 13b) auf einem entsprechenden Trägerelement (15a, 15b) gehalten wird.

13. Verfahren nach Anspruch 12, bei welchem das Trägerelement (15a, 15b) die Formgebungs- oder Aufbau- und Formgebungstrommel (15) ist.

14. Verfahren nach einem der vorhergehenden Ansprüche, bei welchem der Schritt (iv) des Ausbildens **dadurch** ausgeführt wird, dass das lange Element in Umfangswindungen um eine Achse des unvollständigen Aufbaus (13, 13a, 13b) abgelegt wird.

15. Verfahren nach Anspruch 14, bei welchem die Windungen teilweise aufeinander gelegt werden.

16. Verfahren nach einem der vorhergehenden Ansprüche, bei welchem das Bauelement des Reifens (2) ausgewählt wird aus Laufflächenband, Laufflächenbandunterschicht, Seitenwänden und verschleißhemmendem Streifen.

17. Verfahren nach Anspruch 16, bei welchem das Laufflächenband und die Seitenwände entsprechend Schritt (iv) auf jedem unvollständigen Aufbau (13, 13a, 13b) ausgebildet werden.

18. Verfahren nach Anspruch 16, bei welchem das Laufflächenband, die Laufflächenbandunterschicht und die Seitenwände entsprechend Schritt (iv) auf jedem unvollständigen Aufbau (13, 13a, 13b) ausgebildet werden.

19. Verfahren nach einem der vorhergehenden Ansprüche, bei welchem jeder unvollständige Aufbau (13, 13a, 13b) innerhalb der Vervollständigungsstation mit einer Drehbewegung um wenigstens eine Achse des unvollständigen Aufbaus (13, 13a, 13b) und mit einer Translationsbewegung bezüglich wenigstens eines Zuführgliedes (19a, 19b, 19c) für das fortlaufende lange Element bewegt wird.

20. Verfahren nach einem der vorhergehenden Ansprüche, bei welchem die entsprechend Schritt (iv) hergestellten Rohreifen aus dem Eingriff mit dem Trägerelement (15a, 15b) gelöst und vorübergehend gespeichert werden, bevor sie zu dem Vulkanisierschritt (v) befördert werden.

21. Verfahren nach einem der vorhergehenden Ansprüche, bei welchem die unvollständigen Aufbauten (13, 13a, 13b), die von einer Montagestrasse (100) zugeführt werden, zu wenigstens zwei Vervollständigungsstationen (200) überführt werden.

22. Verfahren nach einem der Ansprüche 1 bis 20, bei welchem von wenigstens zwei Montagestrassen (100) zugeführte Chargen unvollständiger Aufbauten (13, 13a, 13b) zu einer Vervollständigungsstation (200) überführt werden.

23. Anlage zur Herstellung von Reifen
- mit wenigstens einer Montagestrasse (100) für die Herstellung von unvollständigen Rohreifenaufbauten (13, 13a, 13b), die im Wesentlichen eine Torusform haben, wobei die Strasse wenigstens eine Vorrichtung zum Aufbau von Karkassenaufbauten (3) in Form einer im Wesentlichen zylindrischen Hülse und wenigstens eine Vorrichtung für ein solches Formen der Karkassenaufbauten (3) hat, dass sie eine im Wesentlichen torusförmige Gestalt haben, wobei die Karkassenaufbauten (3) wenigstens eine Karkassenlage (10) aufweisen, die funktionsmäßig ringförmigen Verstärkungsaufbauten (3) zugeordnet ist, die axial voneinander beabstandet sind,
- mit wenigstens einer Lagerstation (300) für ein vorübergehendes Lagern der unvollständigen Aufbauten (13, 13a, 13b), die von wenigstens einer Montagestrasse (100) erzeugt werden,
- mit wenigstens einer Vervollständigungsstation (200), die wenigstens ein Zuführglied (19a, 19b, 19c) zum Zuführen eines fortlaufenden langen Elements aus rohem elastomerem Material und wenigstens zwei Einheiten (20a, 20b) zum Handhaben der unvollständigen Aufbauten (13, 13a, 13b) aufweist, die von der Montagestrasse (100) zugeführt werden, wobei die Handhabungseinheiten (20a, 20b) in der Lage sind, den unvollständigen Aufbauten (13, 13a, 13b) eine Drehbewegung um wenigstens eine Achse des unvollständigen Aufbaus (13, 13a, 13b) und eine Translationsbewegung bezüglich des wenigstens einen Zuführglieds (19a, 19b, 19c) zu geben, so dass auf den unvollständigen Aufbau (13, 13a, 13b) wenigstens ein Bauelement des Reifens gebildet wird, wobei das fortlaufende lange Element längs einer vorgegebenen Bahn abgelegt wird.

24. Anlage nach Anspruch 23, bei welcher die Vorrichtung zum Ausbilden der Karkassenaufbauten (3) eine Bautrommel (14) ist.

25. Anlage nach Anspruch 23, bei welcher die Vorrichtung, zum Ausbilden des Karkassenaufbaus (3) mit einer im Wesentlichen torusförmigen Gestalt, eine Formtrommel (15) ist.

26. Anlage nach Anspruch 23, bei welcher die Vorrichtung zum Ausbilden des Karkassenaufbaus (3) und die Vorrichtung zum Formen des Karkassenaufbaus (3) in einer einstufigen Trommel eingeschlossen sind.

27. Anlage nach einem der Ansprüche 23 bis 26, bei welcher die Montagestrasse (100) wenigstens eine zusätzliche Trommel (16) zur Ausbildung eines Gurtaufbaus (4) aufweist.

28. Anlage nach Anspruch 27, bei welcher die Montagestrasse (100) wenigstens ein Überführungselement (18) zum Überführen des Gurtaufbaus (4) in eine Position radial auf der Außenseite des Karkassenaufbaus (3) aufweist.

29. Anlage nach einem der Ansprüche 23 bis 28, die ferner eine Entladestation (400) für die Rohreifen (13c) aufweist, die von der wenigstens einen Vervollständigungsstation (200) erzeugt werden.

30. Anlage nach einem der Ansprüche 23 bis 29, bei welcher die wenigstens eine Vervollständigungsstation (200) wenigstens zwei Zuführglieder (19a, 19b, 19c) aufweist.

31. Anlage nach Anspruch 30, bei welcher die wenigstens eine Vervollständigungsstation (200) drei Zuführglieder (19a, 19b, 19c) aufweist.

32. Anlage nach Anspruch 30 oder 31, bei welcher ein erstes Zuführglied (19a) und ein zweites Zuführglied (19b) so angeordnet sind, dass die jeweiligen langen Elemente des rohen elastomeren Materials im Wesentlichen auf der gleichen Höhe zugeführt werden.

33. Anlage nach Anspruch 32, bei welcher ein drittes Zuführglied (19c) so angeordnet ist, dass das jeweilige lange Element aus rohem elastomeren Material auf einer Höhe zugeführt wird, die vertikal größer als die Höhe des ersten Zuführglieds (19a) und des zweiten Zuführglieds (19b) ist.

34. Anlage nach einem der Ansprüche 30 bis 33, bei welchem die wenigstens zwei Zuführglieder (19a, 19b, 19c) symmetrisch bezüglich einer gleichen vertikalen Symmetrieebene (α) angeordnet sind.

35. Anlage nach Anspruch 34, bei welcher die wenigstens zwei Handhabungseinheiten (20a, 20b) symmetrisch bezüglich der vertikalen Symmetrieebene (α) angeordnet sind.

36. Anlage nach einem der Ansprüche 23 bis 35, bei welcher wenigstens zwei Vervollständigungsstationen (200) jeder Montagestrasse (100) zugeordnet sind.

37. Anlage nach einem der Ansprüche 23 bis 35, bei welcher wenigstens zwei Montagestrassen (100) jeder Vervollständigungsstation (200) zugeordnet sind.

38. Vervollständigungsstation mit wenigstens einem Zuführglied (19a, 19b, 19c) zum Zuführen eines fortlaufenden langen Elements aus rohem elastomeren Material und mit wenigstens zwei Einheiten (20a, 20b) zum Handhaben von unvollständigen Aufbauten (13, 13a, 13b) von Rohreifen, wobei die Handhabungseinheiten (20a, 20b) in der Lage sind, den unvollständigen Aufbauten (13, 13a, 13b) eine Drehbewegung um wenigstens eine Achse des unvollständigen Aufbaus (13, 13a, 13b) und eine translative Bewegung bezüglich des wenigstens einen Zuführgliedes (19a, 19b, 19c) zu geben, so dass auf den unvollständigen Aufbauten (13, 13a, 13b) wenigstens ein Bauelement des Reifens gebildet wird, wobei das fortlaufende lange Element längs einer vorgegebenen Bahn abgelegt wird.

39. Vervollständigungsstation nach Anspruch 38 mit wenigstens zwei Zuführgliedern (19a, 19b, 19c).

40. Vervollständigungsstation nach Anspruch 39 mit drei Zuführgliedern (19a, 19b, 19c).

41. Vervollständigungsstation nach Anspruch 39 oder 40, bei welcher ein erstes Zuführglied (19a) und zweites Zuführglied (19b) so angeordnet sind, dass die jeweiligen langen Elemente aus rohem elastomeren Material im Wesentlichen auf der gleichen Höhe zugeführt werden.

42. Vervollständigungsstation nach Anspruch 41, bei welcher das dritte Zuführglied (19c) so angeordnet ist, dass das jeweilige lange Element aus rohem elastomerem Material auf einer Höhe zugeführt wird, die vertikal größer als die Höhe des ersten Zuführglieds (19a) und des zweiten Zuführglieds (19b) ist.

43. Vervollständigungsstation nach einem der Ansprüche 39 bis 42, bei welcher die wenigstens zwei Zuführglieder (19a, 19b, 19c) symmetrisch bezüglich einer gleichen vertikalen Symmetrieebene (α) angeordnet sind.

44. Vervollständigungsstation nach Anspruch 43, bei welcher die wenigstens zwei Handhabungseinheiten (20a, 20b) symmetrisch bezüglich der vertikalen Symmetrieebene (α) angeordnet sind.
